# EUROPEAN PATENT SPECIFICATION

(11) **EP 0 580 287 B1**
(45) Date of publication and mention of the grant of the patent: **01.09.1999**
(21) Application number: 93304676.5
(22) Date of filing: 16.06.1993
(51) Int. Cl.: H04N 5/10, H04N 7/00

(54) **Method and apparatus for detecting a frame sync signal**
Verfahren und Gerät zum Feststellen von Bildsynchronisationssignalen
Méthode et dispositif pour détecter un signal de synchronisation d'image

(30) Priority: 23.07.1992 KR 1317592
(43) Date of publication of application: 26.01.1994
(73) Proprietor: SAMSUNG ELECTRONICS CO., LTD., Suwon-city, Kyungki-do 441-373 (KR)
(72) Inventor: Han, Hongsoo, Suwon-CityKyonggi-Do (KR)
(74) Representative: Read, Matthew Charles

(56) References cited:
- EP-A- 0 320 882
- EP-A- 0 419 380
- EP-A- 0 451 767
- FR-A- 2 610 773
- US-A- 4 965 814
- US-A- 5 018 140
- PATENT ABSTRACTS OF JAPAN vol. 15, no. 423 (E-1127)28 October 1991 & JP-A-03 178 236 (FUJITSU LTD.) 2 August 1991

## Description

The present invention relates to a frame sync signal detecting apparatus for a raster scan video system comprising a frame sync detector for detecting a frame sync pattern in an input video signal to produce a frame sync detect signal and a method of detecting a frame sync signal in a raster scan video signal, comprising the step of detecting a frame sync signal to produce a frame sync detect signal.

The present invention has particular, although not exclusive, application to the D2 MAC system.

The frame sync signal of a D2 MAC signal comprises a 64-bit code in line 625. Figure 1 illustrates the structure of a frame of a D2 MAC signal. One frame in the D2 MAC signal consists of 625 lines, lines 1 to 624 each having a period of 64 microseconds and containing video, audio and information data. Line 625 differs from the other lines and comprises an initial 6 bits containing line sync data, 32 bits of clock data (555 555 HEX), a 64-bit frame sync signal (65AE F315 3F41 C246 HEX) and other service data.

Conventionally, the frame sync signal is detected by comparing data in an input D2 MAC signal with a 64-bit reference code. Since a plurality of registers is required to enable comparison of the full 64-bit pattern, the known system is undesirably complex and is sensitive to errors in the received sync signal.

It is an aim of the present invention to overcome the above-mentioned disadvantages of the prior art.

An apparatus according to the present invention is characterised by the frame sync detector being responsive to a predetermined portion of the frame sync pattern to generate the frame sync detect signal and a pseudo frame sync detector for generating a pseudo frame sync detect signal at a predicted frame sync pattern timing, and frame sync signal generating means for selectively outputting the frame sync detect signal or the pseudo frame sync detect signal in dependence on the degree of temporal agreement therebetween during a predetermined number of frames.

Preferably, the frame sync signal generating means outputs the frame sync detect signal in response to a mismatch occurring between the frame sync detect signal and the pseudo frame sync detect signal during a predetermined number of successive frames. More preferably, the predetermined number is 7.

Preferably, the frame sync signal generating means outputs the pseudo frame sync detect signal in response to a match occurring between the frame sync detect signal and the pseudo frame sync detect signal during a further predetermined number of successive frames. More preferably, further predetermined number is 3.

Preferably, the pseudo frame sync detector includes a first counter for counting horizontal sync signals and a second counter for counting a predetermined number of bit periods within a horizontal line identified by the first counter.

Preferably, the frame sync detector comprises a comparator for comparing an input data signal with a reference code. Advantageously, the reference code corresponds to a predetermined portion of a frame sync pattern, for instance the last 16-bits thereof.

A method according to the present invention is characterised by the steps of:
generating a pseudo frame sync detect signal at a predicted frame sync pattern timing; and
selectively outputting the frame sync detect signal or the pseudo frame sync detect signal in dependence on the degree of temporal agreement therebetween during a predetermined number of frames.

Preferably, the frame detect signal is output in response to a mismatch occurring between the frame sync detect signal and the pseudo frame sync detect signal during a predetermined number of successive frames. More preferably, the predetermined number is 7.

Preferably, the pseudo frame detect signal is output in response to a match occurring between the frame sync detect signal and the pseudo frame sync detect signal during a further predetermined number of successive frames. More preferably, said further predetermined number is 3.

Preferably, the psuedo frame sync detect signal is generated by counting a predetermined number of horizontal lines and then counting a predetermined number of bit periods in a horizontal line.

Preferably, the frame sync detect signal is generated by comparing an input data signal with a reference code. Advantageously, the reference code corresponds to a predetermined portion of a frame sync pattern, for instance the last 16 bits thereof.

An embodiment of the present invention will now be described, by way of example, with reference to the accompanying drawings, in which:
Figure 1 is a conceptual diagram showing a frame of a D2 MAC signal;
Figure 2 is a block diagram showing a preferred embodiment of the present invention;
Figure 3 is a waveform diagram for a part of the device of Figure 2;
Figure 4 is a block diagram of a part of the device of Figure 2;
Figure 5 is a block diagram of a part of the device of Figure 2; and
Figure 6 is a block diagram of a part of the device of Figure 2.

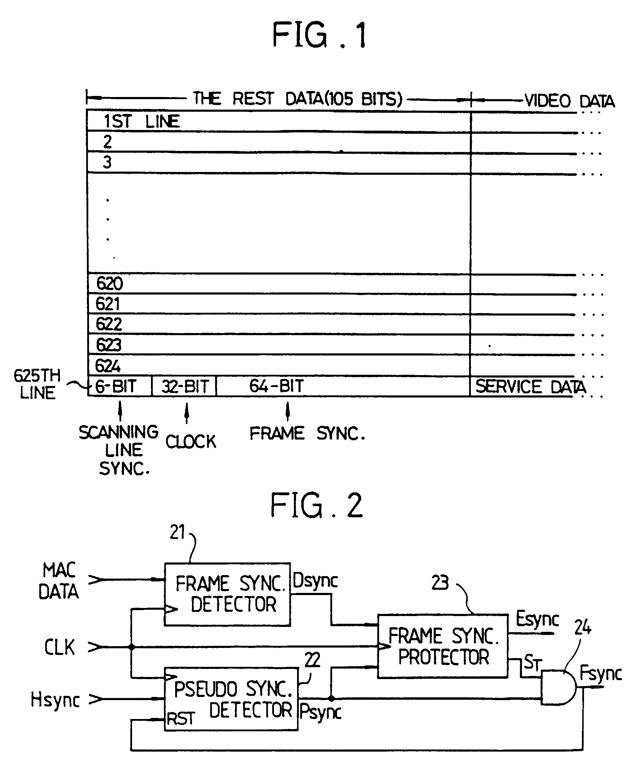

Referring to Figure 2, the apparatus comprises a frame sync detector 21 for detecting the frame sync patterns in an input MAC signal and outputting a sync pattern detect signal (D_{SYNC}); a pseudo sync detector 22 for receiving input line horizontal sync data (H_{SYNC}) and a fedback frame sync detecting signal (F_{SYNC}) and outputting a pseudo sync detect signal (P_{SYNC}); a frame sync protector 23 for receiving the sync pattern detect signal (D_{SYNC}) and the pseudo sync detect signal (P_{SYNC}) and outputting a final decision signal (S_{T}) and a sync detect error signal (E_{SYNC}); and an AND gate 24 for receiving the final decision signal (S_{T}) and the pseudo sync detecting signal (P_{SYNC}) and outputting the frame sync detecting signal (F_{SYNC}).

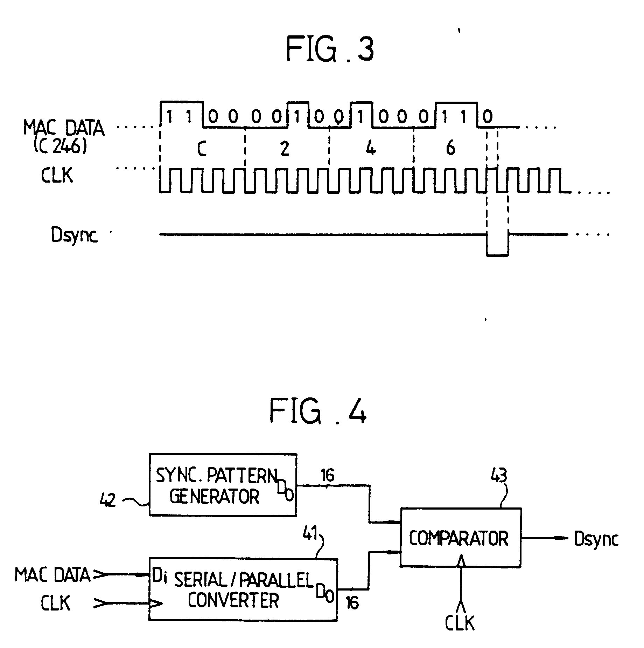

MAC data at 10.125 Mbits/sec and a clock (CLK) at 10.125 MHz are respectively input into the frame sync detector 21. The frame sync detector 21 generates the sync pattern detect signal in the form of a low going pulse when the final "6 HEX" of the 64-bit frame sync data ("625AE F315 3F41 C245 HEX") which is included in the 625th line, has been input. Figure 3 shows the waveform of the sync pattern detect signal (D_{SYNC}).

The pseudo sync detector 22 receives the horizontal sync data (H_{SYNC}) of each line and the 10.125 MHz clock and outputs the pseudo sync detect signal (P_{SYNC}) as a low-going pulse at the end point of the frame sync data of the 625th line. The frame sync protector 23 receives the sync pattern detect signal (D_{SYNC}), output by the frame sync detector 21, and the pseudo sync detect signal (P_{SYNC}), provided from the pseudo sync detector 22, and outputs the result after deciding whether the pulse positions of the two signals are in accord by comparing the two signals. If the sync pattern detecting signal (D_{SYNC}) is not in agreement with the pseudo sync detect signal (P_{SYNC}), the frame sync protector 23 outputs the sync detect error signal (E_{SYNC}) as a high level signal and outputs simultaneously the sync pattern detect signal (D_{SYNC}) as the final decision signal (S_{T}). While if the two signals are in agreement, the frame sync protector 23 outputs the sync detect error signal (E_{SYNC}) as a low level signal and outputs simultaneously a high level constant signal as the final decision signal (S_{T}). When a high level final decision signal (S_{T}) is applied to the AND gate 24, the pseudo sync detect signal (P_{SYNC}) is output as the frame sync detect signal (F_{SYNC}) and the frame sync detect signal (F_{SYNC}) is fed back to the pseudo sync detector 22, to reset the pseudo sync detector 22.

The form and operation of each block in Figure 2 will be given in detail below.

Referring to Figure 4, the D2 MAC data, which is input in series, is converted into 16-bit parallel data in accordance with the clock (CLK) in a serial/parallel converter 41. A sync pattern generator 42 outputs C246 (HEX) corresponding to the last 16 bits of the frame sync data. A comparator 43 compares the 16 bit parallel MAC data, which is input from the serial/parallel coverter 41, with the 16 bit data (C246 HEX) which is input from the sync pattern generator 42. When the two data words are in agreement, the comparator 43 generates the sync pattern detect signal (D_{SYNC}) as a low going pulse as shown in Figure 3.

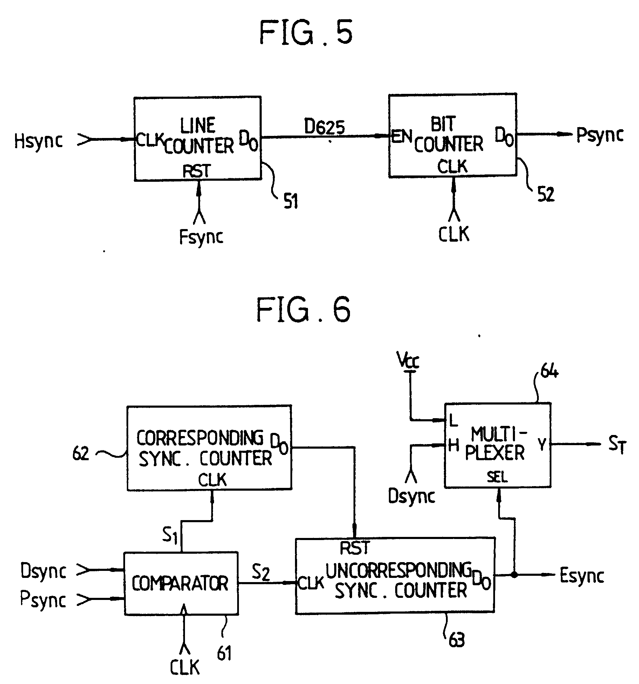

Referring to Figure 5, a line counter 51 counts the input horizontal sync data (H_{SYNC}), and outputs a 625 line detect signal (D₆₂₅) as high level signal as soon as it counts the horizontal sync data of the 625th line. The 625 line detecting signal (D₆₂₅) enables a bit-counter 52. The bit-counter 52 starts counting in accordance with the clock. The bit-counter 52 counts up to 96 bits and generates the pseudo sync detect signal (P_{SYNC}) as a low-going pulse at the 96th bit. Thus, the pseudo sync detecting signal (P_{SYNC}) corresponds with the end position of the frame sync data which is in the 625th line.

The count values of the line counter 51 are reset by the fedback frame sync detecting signal (F_{SYNC}).

Referring to Figure 6, a comparator 61 compares the sync pattern detecting signal (D_{SYNC}), which is supplied from the frame sync detector, with the pseudo sync detecting signal (P_{SYNC}), which is supplied from the pseudo sync detector, and determines whether the two signals are in agreement. When the two signals (D_{SYNC}, P_{SYNC}) are in agreement, the comparator 61 generates a corresponding sync signal (S1) as a high level signal. The corresponding sync signal (S1) is input to the clock terminal of the corresponding sync counter 62. For example, in the case that the corresponding sync counter 62 is a modulo-3 counter, when a high level corresponding sync signal (S1) from the comparator 62 is input 3 times, that is, the sync pattern detecting signal (D_{SYNC}) continuously corresponds with the pseudo sync detecting signal (P_{SYNC}) for three frames, the corresponding sync counter 62 generates a designated reset signal (RST). The reset signal (RST) resets an uncorresponding sync counter 63. When the sync pattern detect signal (D_{SYNC}) does not correspond with the pseudo sync detecting signal (P_{SYNC}) in the comparator 61, the comparator 61 generates a uncorresponding sync signal (S2) as a high level signal and inputs it to the clock terminal of the uncorresponding sync counter 63. For instance, in the case that the uncorresponding sync counter 63 is a modulo-7 counter, when a high level uncorresponding sync signal (S2), generated by the comparator 61, is input 7 times, that is, the sync pattern detect signal (D_{SYNC}) continuously does not agree with the pseudo sync detecting signal (P_{SYNC}) for seven frames, the uncorresponding sync counter 63 generates the sync detect error signal (E_{SYNC}) as a high level signal.

The sync detect error signal (E_{SYNC}) is input to a selecting terminal of multiplexer 64. An input terminal (H) of the multiplexer 64 receives the sync pattern detect signal (D_{SYNC}) and another terminal (L) is connected to a constant DC voltage (Vcc). The multiplexer 64 outputs one of the input signals as the final decision signal (S_{T}) in response to the state of sync detect error signal (E_{SYNC}) applied to a selection terminal (SEL). In the case where the sync detect error signal (E_{SYNC}) is a high level signal, the multiplexer 64 outputs the sync pattern detecting signal (D_{SYNC}) as the final decision signal (S_{T}). While in the case that the sync detect error signal (E_{SYNC}) is a low level signal, the multipliexer 64 outputs the constant voltage signal (Vcc) as the final decision signal (S_{T}).

Referring again to Figure 2, the final decision signal (S_{T}), generated by the frame sync protector 23, is input to one input terminal of the AND gate 24, and the pseudo sync detecting signal (P_{SYNC}) is provided to the other terminal. In the case that errors are generated beyond the predetermined limit, that is, errors are generated in seven successive frames, the sync pattern detect signal (D_{SYNC}) is input to the AND gate 25 as the final decision signal (S_{T}). Then, the AND gate 24 logically AND-operates the sync pattern detect signal (D_{SYNC}) and the pseudo sync detect signal (P_{SYNC}) and outputs the appropriate frame sync detect signal (F_{SYNC}). The frame sync detect signal F(_{SYNC}) is fedback to the psuedo sync detector 22 to reset the line counter 51. Since the frame sync detect signal (F_{SYNC}) is equal to the sync pattern detect signal (D_{SYNC}), the frame sync detect signal (F_{SYNC}) has a low-going pulse at the end position of the frame sync data. The line counter 51 counts the first line of the frame when an input signal changes state from low to high. In the case where there are no errors within a predetermined limit, the constant voltage signal (Vcc) is input to the AND gate 24 as the final decision signal (S_{T}). Then, the AND gate 24 logically AND-operates the constant voltage signal (Vcc) and the pseudo sync detect signal (P_{SYNC}) and outputs the appropriate frame sync detect signal (F_{SYNC}). The frame sync detect signal (F_{SYNC}) is fedback to the pseudo sync detector 22 to reset the line counter 51.

As described above, a system for detecting the frame sync data of the D2 MAC signal in accordance with the present invention is simple in structure because it examines only whether errors exist the last 16 bits (C245 HEX) of the 64-bit frame sync data. Though there are some errors due to transmission, the system disregards minor errors and outputs the frame detect signal as long as there are no errors within a predetermined number of successive frames. Accordingly, the system has the effect of protecting the frame sync data. In the case where there are errors in a predetermined number of successive frames, it generates the error signal on determining an error state, thereby preventing frame sync errors.

## Claims

1. A frame sync signal detecting apparatus for a raster scan video system comprising a frame sync detector (21) for detecting a frame sync pattern in an input video signal (MAC DATA) to produce a frame sync detect signal (D_{SYNC}), **characterised by** the frame sync detector being responsive to a predetermined portion of the frame sync pattern to generate the frame sync detect signal, a pseudo frame sync detector (22) for generating a pseudo frame sync detect signal (P_{SYNC}) at a predicted frame sync pattern timing, and frame sync signal generating means (23, 24) for selectively outputting the frame sync detect signal (D_{SYNC}) or the pseudo frame sync detect signal (P_{SYNC}) in dependence on the degree of temporal agreement therebetween during a predetermined number of frames.

2. Apparatus according to claim 1, wherein the frame sync signal generating means (23, 24) outputs the frame sync detect signal (F_{SYNC}) in response to a mismatch occurring between the frame sync detect signal (D_{SYNC}) and the pseudo frame sync detect signal (P_{SYNC}) during a predetermined number of successive frames.

3. Apparatus according to claim 2, wherein said predetermined number is 7.

4. An apparatus according to claim 1, 2 or 3, wherein the frame sync signal generating means (23, 24) outputs the pseudo frame sync detect signal (P_{SYNC}) in response to a match occurring between the frame sync detect signal (D_{SYNC}) and the pseudo frame sync detect signal (D_{SYNC}) during a further predetermined number of successive frames.

5. An apparatus according to claim 4, wherein said further predetermined number is 3.

6. An apparatus according to any preceding claim, wherein the pseudo frame sync detector (22, 23) includes a first counter (51) for counting horizontal sync signals (H_{SYNC}) and a second counter (52) for counting a predetermined number of bit periods within a horizontal line identified by the first counter (51).

7. An apparatus according to any preceding claim, wherein the frame sync detector (21) comprises a comparator (43) for comparing an input data signal (MAC DATA) with a reference code.

8. An apparatus according to claim 7, wherein the reference code corresponds to said predetermined portion of the frame sync pattern.

9. An apparatus according to claim 8, wherein the reference code comprises the last 16 bits of a frame sync pattern.

10. An apparatus according to any preceding claim, wherein the frame sync detector (21) is arranged to detect a D2 MAC frame sync pattern.

11. A method of detecting a frame sync signal in a raster scan video signal, comprising the step of:
(a) detecting a frame sync signal to produce a frame sync detect signal (D_{SYNC}),
**characterised by** the steps of:
(b) generating a pseudo frame sync detect signal (P_{SYNC}) at a predicted frame sync pattern timing; and
(c) selectively outputting the frame sync detect signal (D_{SYNC}) or the pseudo frame sync detect signal (P_{SYNC}) in dependence on the degree of temporal agreement therebetween during a predetermined number of frames.

12. A method according to claim 11, wherein the frame detect signal (D_{SYNC}) is output in step (c) in response to a mismatch occurring between the frame sync detect signal (D_{SYNC}) and the pseudo frame sync detect signal (P_{SYNC}) during a predetermined number of successive frames.

13. A method according to claim 12, wherein said predetermined number is 7.

14. A method according to claim 11, 12 or 13, wherein the pseudo frame detect signal (P_{SYNC}) is output in step (c) in response to a match occurring between the frame sync detect signal (D_{SYNC}) and the pseudo frame sync detect signal (P_{SYNC}) during a further predetermined number of successive frames.

15. A method according to claim 14, wherein said further predetermined number is 3.

16. A method according to any one of claims 11 to 15, wherein step (b) comprises counting a predetermined number of horizontal lines and then counting a predetermined number of bit periods in a horizontal line.

17. A method according to any one of claims 11 to 16, wherein step (a) comprises comparing an input data signal with a reference code.

18. A method according to claim 17, wherein the reference code corresponds to a predetermined portion of a frame sync pattern.

19. A method according to claim 18, wherein the reference code comprises the last 16 bits of a frame sync pattern.

20. A method according to any one of claims 11 to 19, wherein the raster scan video signal is a D2 MAC signal.

## Patentansprüche

1. Bildsynchronisationssignal-Erfassungsvorrichtung für ein Rasterabtast-Videosystem, mit einem Bildsynchronisationsdetektor (21) zum Erfassen eines Bildsynchronisationsmusters in einem Eingangsvideosignal (MAC DATA), um ein Bildsynchronisation-Erfassungssignal (D_{SYNC}) zu erzeugen, **gekennzeichnet durch** die Tatsache, daß der Bildsynchronisationsdetektor auf einen vorgegebenen Abschnitt des Bildsynchronisationsmusters anspricht, um das Bildsynchronisation-Erfassungssignal zu erzeugen, einen Pseudobildsynchronisationsdetektor (22) zum Erzeugen eines Pseudobildsynchronisation-Erfassungssignals (P_{SYNC}) mit einem vorgegebenen Bildsynchronisationsmuster-Zeitverlauf, und eine Bildsynchronisationssignal-Erzeugungseinrichtung (23, 24) zum wahlweisen Ausgeben des Bildsynchronisation-Erfassungssignal (D_{SYNC}) oder des Pseudobildsynchronisations-Erfassungssignals (P_{SYNC}) in Abhängigkeit vom Grad der zeitlichen Übereinstimmung zwischen ihnen während einer vorgegebenen Anzahl von Bildern.

2. Vorrichtung nach Anspruch 1, wobei die Bildsynchronisationssignal-Erzeugungseinrichtung (23, 24) das Bildsynchronisation-Erfassungssignal (F_{SYNC}) als Antwort auf eine fehlende Übereinstimmung, die zwischen dem Bildsynchronisation-Erfassungssignal (D_{SYNC}) und dem Pseudobildsynchronisation-Erfassungssignal (P_{SYNC}) während einer vorgegebenen Anzahl aufeinanderfolgender Bilder auftritt, ausgibt.

3. Vorrichtung nach Anspruch 2, wobei die vorgegebene Anzahl 7 ist.

4. Vorrichtung nach Anspruch 1, 2 oder 3, wobei die Bildsynchronisationssignal-Erzeugungseinrichtung (23, 24) das Pseudobildsynchronisation-Erfassungssignal (P_{SYNC}) als Antwort auf eine Übereinstimmung, die zwischen dem Bildsynchronisation-Erfassungssignal (D_{SYNC}) und dem Pseudobildsynchronisation-Erfassungssignal (D_{SYNC}) während einer weiteren vorgegebenen Anzahl aufeinanderfolgender Bilder auftritt, ausgibt.

5. Vorrichtung nach Anspruch 4, wobei die weitere vorgegebene Anzahl 3 ist.

6. Vorrichtung nach irgendeinem vorangehenden Anspruch, wobei der Pseudobildsynchronisationsdetektor (22, 23) einen ersten Zähler (51) zum Zählen horizontaler Synchronisationssignale (H_{SYNC}) und einen zweiten Zähler (52) zum Zählen einer vorgegebenen Anzahl von Bitperioden innerhalb einer horizontalen Zeile, die durch den ersten Zähler (51) identifiziert wird, enthält.

7. Vorrichtung nach irgendeinem vorangehenden Anspruch, wobei der Bildsynchronisationsdetektor (21) einen Komparator (43) zum Vergleichen eines Eingangsdatensignals (MAC DATA) mit einem Referenzcode enthält.

8. Vorrichtung nach Anspruch 7, wobei der Referenzcode dem vorgegebenen Abschnitt des Bildsynchronisationsmusters entspricht.

9. Vorrichtung nach Anspruch 8, wobei der Referenzcode die letzten 16 Bits eines Bildsynchronisationsmusters enthält.

10. Vorrichtung nach irgendeinem vorangehenden Anspruch, wobei der Bildsynchronisationsdetektor (21) so beschaffen ist, daß er ein D2 MAC-Bildsynchronisationsmuster erfaßt.

11. Verfahren zum Erfassen eines Bildsynchronisationssignals in einem Rasterabtast-Videosignal, mit dem folgenden Schritt:
(a) Erfassen eines Bildsynchronisationssignals, um ein Bildsynchronisation-Erfassungssignal (D_{SYNC}) zu erzeugen,
**gekennzeichnet durch** die folgenden Schritte:
(b) Erzeugen eines Pseudobildsynchronisation-Erfassungssignals (P_{SYNC}) mit einem vorhergesagten Bildsynchronisationsmuster-Zeitverlauf; und
(c) wahlweises Ausgeben des Bildsynchronisation-Erfassungssignals (D_{SYNC}) oder des Pseudobildsynchronisation-Erfassungssignals (P_{SYNC}) in Abhängigkeit vom Grad einer zeitlichen Übereinstimmung zwischen ihnen während einer vorgegebenen Anzahl von Bildern.

12. Verfahren nach Anspruch 11, bei dem das Bilderfassungssignal (D_{SYNC}) im Schritt (c) als Antwort auf eine fehlende Übereinstimmung ausgegeben wird, die zwischen dem Bildsynchronisation-Erfassungssignal (D_{SYNC}) und dem Pseudobildsynchronisation-Erfassungssignal (P_{SYNC}) während einer vorgegebenen Anzahl von aufeinanderfolgenden Bildern auftritt.

13. Verfahren nach Anspruch, bei dem die vorgegebene Anzahl 7 ist.

14. Verfahren nach Anspruch 11, 12 oder 13, bei dem das Pseudobildsynchronisation-Erfassungssignal (P_{SYNC}) im Schritt (c) als Antwort auf eine Übereinstimmung ausgegeben wird, die zwischen dem Bildsynchronisation-Erfassungssignal (D_{SYNC}) und dem Pseudobildsynchronisation-Erfassungssignal (P_{SYNC}) während einer weiteren vorgegebenen Anzahl aufeinanderfolgender Bilder auftritt.

15. Verfahren nach Anspruch 14, bei dem die weitere vorgegebene Anzahl 3 ist.

16. Verfahren nach irgendeinem der Ansprüche 11 bis 15, bei dem der Schritt (b) das Zählen einer vorgegebenen Anzahl horizontaler Zeilen und dann das Zählen einer vorgegebenen Anzahl von Bitperioden in einer horizontalen Zeile enthält.

17. Verfahren nach irgendeinem der Ansprüche 11 bis 16, bei dem der Schritt (a) das Vergleichen eines Eingangsdatensignals mit einem Referenzcode enthält.

18. Verfahren nach Anspruch 17, bei dem der Referenzcode einem vorgegebenen Abschnitt eines Bildsynchronisationsmusters entspricht.

19. Verfahren nach Anspruch 18, bei dem der Referenzcode die letzten 16 Bits eines Bildsynchronisationsmusters enthält.

20. Verfahren nach irgendeinem der Ansprüche 11 bis 19, bei dem das Rasterabtast-Videosignal ein D2 MAC-Signal ist.

## Revendications

1. Dispositif de détection de signal de synchronisation de trame pour un système vidéo à balayage tramé comprenant un détecteur de synchronisation de trame (21) pour détecter un motif de synchronisation de trame dans un signal vidéo d'entrée (MAC DATA) pour produire un signal de détection de synchronisation de trame (D_{SYNC}), caractérisé par le fait que le détecteur de synchronisation de trame réagit à une partie prédéterminée du motif de synchronisation de trame en générant le signal de détection de synchronisation de trame, un détecteur de pseudo-synchronisation de trame (22) pour générer un signal de détection de pseudo-synchronisation de trame (P_{SYNC}) selon un minutage de motif de synchronisation de trame prévu, et des moyens de génération de signal de synchronisation de trame (23, 24) pour délivrer en sortie sélectivement le signal de détection de synchronisation de trame (D_{SYNC}) ou le signal de détection de pseudo-synchronisation de trame (P_{SYNC}) en fonction du degré de concordance temporelle entre eux durant un nombre prédéterminé de trames.

2. Dispositif selon la revendication 1, dans lequel les moyens de génération de signal de synchronisation de trame (23, 24) délivrent en sortie le signal de détection de synchronisation de trame (F_{SYNC}) en réponse à une discordance qui se produit entre le signal de détection de synchronisation de trame (D_{SYNC}) et le signal de détection de pseudo-synchronisation de trame (P_{SYNC}) durant un nombre prédéterminé de trames successives.

3. Dispositif selon la revendication 2, dans lequel ledit nombre prédéterminé est de 7.

4. Dispositif selon la revendication 1, 2 ou 3, dans lequel les moyens de génération de signal de synchronisation de trame (23, 24) délivrent en sortie le signal de détection de pseudo-synchronisation de trame (P_{SYNC}) en réponse à une concordance se produisant entre le signal de détection de synchronisation de trame (D_{SYNC}) et le signal de détection de pseudo-synchronisation de trame (D_{SYNC}) durant un autre nombre prédéterminé de trames successives.

5. Dispositif selon la revendication 4, dans lequel ledit autre nombre prédéterminé est de 3.

6. Dispositif selon l'une quelconque des revendications précédentes, dans lequel le détecteur de pseudo-synchronisation de trame (22, 23) comprend un premier compteur (51) pour compter des signaux de synchronisation horizontaux (H_{SYNC}) et un deuxième compteur (52) pour compter un nombre prédéterminé de périodes de bits à l'intérieur d'une ligne horizontale identifiée par le premier compteur (51).

7. Dispositif selon l'une quelconque des revendications précédentes, dans lequel le détecteur de synchronisation de trame (21) comprend un comparateur (43) pour comparer un signal de données d'entrée (MAC DATA) à un code de référence.

8. Dispositif selon la revendication 7, dans lequel le code de référence correspond à ladite partie prédéterminée du motif de synchronisation de trame.

9. Dispositif selon la revendication 8, dans lequel le code de référence comprend les 16 derniers bits d'un motif de synchronisation de trame.

10. Dispositif selon l'une quelconque des revendications précédentes, dans lequel le détecteur de synchronisation de trame (21) est configuré pour détecter un motif de synchronisation de trame D2 MAC.

11. Procédé de détection d'un signal de synchronisation de trame dans un signal vidéo à balayage tramé, comprenant l'étape suivante :
(a) la détection d'un signal de synchronisation de trame pour produire un signal de détection de synchronisation de trame (D_{SYNC}),
caractérisé par les étapes suivantes :
(b) la génération d'un signal de détection de pseudo-synchronisation de trame (P_{SYNC}) selon un minutage de motif de synchronisation de trame prévu ; et
(c) la délivrance en sortie de façon sélective du signal de détection de synchronisation de trame (D_{SYNC}) ou du signal de détection de pseudo-synchronisation de trame (P_{SYNC}) en fonction du degré de concordance temporelle entre eux durant un nombre prédéterminé de trames.

12. Procédé selon la revendication 11, dans lequel le signal de détection de trame (D_{SYNC}) est délivré en sortie dans l'étape (c) en réponse à une discordance se produisant entre le signal de détection de synchronisation de trame (D_{SYNC}) et le signal de détection de pseudo-synchronisation de trame (P_{SYNC}) durant un nombre prédéterminé de trames successives.

13. Dispositif selon la revendication 12, dans lequel ledit nombre prédéterminé est de 7.

14. Procédé selon la revendication 11, 12 ou 13, dans lequel le signal de détection de pseudo-synchronisation de trame (P_{SYNC}) est délivré en sortie au cours de l'étape (c) en réponse à une concordance se produisant entre le signal de détection de synchronisation de trame (D_{SYNC}) et le signal de détection de pseudo-synchronisation de trame (P_{SYNC}) durant un autre nombre prédéterminé de trames successives.

15. Procédé selon la revendication 14, dans lequel ledit autre nombre prédéterminé est de 3.

16. Procédé selon l'une quelconque des revendications 11 à 15, dans lequel l'étape (b) comprend le comptage d'un nombre prédéterminé de lignes horizontales, puis ensuite le comptage d'un nombre prédéterminé de périodes de bits dans une ligne horizontale.

17. Procédé selon l'une quelconque des revendications 11 à 16, dans lequel l'étape (a) comprend la comparaison d'un signal de données d'entrée avec un code de référence.

18. Procédé selon la revendication 17, dans lequel le code de référence correspond à une partie prédéterminée d'un motif de synchronisation de trame.

19. Procédé selon la revendication 18, dans lequel le code de référence comprend les 16 derniers bits d'un motif de synchronisation de trame.

20. Procédé selon l'une quelconque des revendications 11 à 19, dans lequel le signal vidéo à balayage tramé est un signal D2 MAC.
